# NEUE EUROPÄISCHE PATENTSCHRIFT

(11) **EP 1 404 541 B2**
(45) Veröffentlichungstag und Bekanntmachung des Hinweises auf die Entscheidung über den Einspruch: **05.11.2008**
(45) Hinweis auf die Patenterteilung: 09.11.2005
(21) Anmeldenummer: 02754194.5
(22) Anmeldetag: 12.06.2002
(51) Int. Cl.: B60N 2/00, B60R 21/01

(54) **VERFAHREN ZUR ANPASSUNG VON SENSORZELLEN EINER SITZMATTE AN EINE MECHANISCHE VORSPANNUNG**
METHOD FOR ADAPTING SENSOR CELLS OF A SEAT MAT TO A MECHANICAL PRESTRESS
PROCEDE POUR ADAPTER DES CELLULES DE DETECTION D'UN TAPIS D'ASSISE A UNE PRECONTRAINTE MECANIQUE

(30) Priorität: 27.06.2001 DE 10130905
(43) Veröffentlichungstag der Anmeldung: 07.04.2004
(73) Patentinhaber: ROBERT BOSCH GMBH, 70442 Stuttgart (DE)
(72) Erfinder: GIESEL, Ruediger, 70376 Stuttgart (DE); WOLF, Rene, 71701 Schwieberdingen (DE); MARCHTHALER, Reiner, 73333 Gingen (DE); LICH, Thomas, 71409 Schwaikheim (DE); MACK, Frank, 70376 Stuttgart (DE)
(86) Internationale Anmeldenummer: PCT/DE2002/002146
(87) Internationale Veröffentlichungsnummer: WO 2003/002371

(56) Entgegenhaltungen:
- WO-A-01/62539
- WO-A-01/85497
- WO-A-02/14101
- DE-A1- 3 410 082
- DE-A1- 4 940 027
- DE-A1- 10 005 445
- DE-A1- 19 949 785
- US-A- 5 474 327
- US-A- 5 991 676
- US-A- 6 012 007
- US-A- 6 138 067
- CARL HANSER VERLAG MONCHEN WIEN: 'Handbuch der Messtechnik', 1999, JöRG HOFFMANN, ISBN 3446211233 Seiten 35,54 - 55
- 'Kraftfahrzeugtechnisches Taschenbuch', Bd. 22, 10 Oktober 1995, BOSCH Seite 102,103

## Beschreibung

### Stand der Technik

Die Erfindung geht aus von einem Verfahren zur Anpassung von Sensorzellen einer Sitzmatte an eine mechanische Vorspannung nach der Gattung des unabhängige Patentanspruchs.

Es ist bereits aus der Offenlegungsschrift -A-WO 97/10115 bekannt, jede Sensorzelle einer Sitzmatte an eine mechanische Vorspannung, die durch den Verbau der Sitzmatte in einem Fahrzeugsitz bedingt ist, anzupassen. Solch eine Sitzmatte wird verwendet, um festzustellen, ob sich eine Person auf dem Fahrzeugsitz befindet und welche Sitzstellung diese Person eingenommen hat und auch gegebenenfalls, um festzustellen, wie schwer die Person ist. Diese Daten werden dann zur Ansteuerung eines Airbags verwendet.

Aus der nicht vorveröffentlichten WO-A-01/85 497 ist es bekannt, dass eine Kalibrierungseinheit vorliegt, mittels derer in einem Kalibrierungsvorgang Sensorvorspannungen einer Sensormatte normalisiert werden. Diese Daten werden dann in einem Speicher eines Steuergeräts übertragen.

### Vorteile der Erfindung

Das erfindungsgemäße Verfahren zur Anpassung von Sensorzellen einer Sitzmatte an eine mechanische Vorspannung mit den Merkmalen des unabhängigen Patentanspruchs hat demgegenüber den Vorteil, daß die Vorspannung durch einen Diagnosetester herstellerseitig ermittelt wird und daraus Korrekturdaten abgeleitet werden, mit denen man das Steuergerät konfiguriert, so dass für die Sitzmatte im Betrieb die Meßwerte korrigiert werden. Damit sind Sitzmatten auch bei unterschiedlichen Einbaubedingungen immer noch einsetzbar, sofern die mechanische Vorspannung innerhalb gegebener Parameter liegt und die Sensorzellen immer noch einen Auflagedruck durch eine sitzende Person messen können.

Durch die in den abhängigen Ansprüchen aufgeführten Maßnahmen und Weiterbildungen sind vorteilhafte Verbesserungen des im unabhängigen Patentanspruch angegebenen Verfahrens zur Anpassung von Sensorzellen einer Sitzmatte an eine mechanische Vorspannung möglich.

Besonders vorteilhaft ist, daß die Korrekturwerte in einem Speicher des Steuergeräts abgespeichert werden, so daß in diesem Speicher, der zu Anfang mit Nullwerten initialisiert wurde, die Korrekturwerte während der Betriebsdauer des Steuergeräts permanent zur Verfügung stehen. Gegebenenfalls kann auch bei einem Neueinbau einer Sitzmatte dieser Speicher wieder mit neuen Korrekturwerten überschrieben werden.

Darüber hinaus ist es von Vorteil, daß beim Anschluß des Diagnosetesters an das Steuergerät zunächst ein Password von dem Diagnosetester abgefragt wird, so daß nur ein gesicherter Zugang an das Steuergerät und das Beschreiben des Speichers des Steuergeräts möglich ist.

Weiterhin ist es von Vorteil, daß ein Diagnosetester zur Durchführung des Verfahrens vorhanden ist, der eine Datenübertragungsschnittstelle zum Anschluß an das Steuergerät, einen eigenen Speicher für die Sollwerte, der hier ein Permanentspeicher sein kann, und einen Prozessor zur Durchführung des Vergleichs zwischen den Sollwerten und den Sensorwerten aufweist.

Es ist auch von Vorteil, daß ein Steuergerät zur Durchführung des erfindungsgemäßen Verfahrens vorhanden ist, das eine eigene Datenübertragungsschnittstelle zum Anschluß an den Diagnosetester und eine weitere Datenübertragungsschnittstelle zum Anschluß an die Sitzmatte sowie einen Prozessor, z.B. ein Mikrokontroller zur Auswertung der Sensorwerte und ein Speicher zur Aufnahme der Korrekturwerte aufweist.

### Zeichnung

Ausführungsbeispiele der Erfindung sind in der Zeichnung dargestellt und werden in der nachfolgenden Beschreibung näher erläutert. Es zeigen:
Figur 1 ein Blockschaltbild der erfindungsgemäßen Diagnosetester und Steuergerät und
Figur 2 ein Flußdiagramm des erfindungsgemäßen Verfahrens.

### Beschreibung

Die Personenerkennung im Fahrzeug ist für Rückhaltesysteme eine an Bedeutung zunehmende Aufgabe. Es ist insbesondere wichtig, festzustellen, für welche Person ein Airbag verwendet werden kann und für welche nicht. Dabei ist es auch bei adaptiv einstellbaren Airbags möglich, diesen Airbag bei einem Aufprall und einer daraus folgenden Auslösesituation in Abhängigkeit vom Gewicht der Person auszulösen. Damit soll dann erreicht werden, daß eine optimale Rückhaltekraft auf die zu schützende Person ausgeübt wird. Neben optischen und Ultraschallsensoren werden auch Gewichtssensoren verwendet und dabei insbesondere eine Sitzmatte mit Sensorelementen, wobei jedes Sensorelement als ein drucksensitiver Widerstand ausgebildet ist. Diese Sensorelemente sind in einer Matrix angeordnet, die von einem Steuergerät, das für diese Sitzmatte verwendet wird, zyklisch abgefragt werden. Die einzelnen Sensorelemente weisen einen niedrigeren Widerstand auf, je höher der ausgeübte Druck auf sie ist. Mit den Sensorelementen lassen sich auch Sitzprofile erstellen, die darüber Auskunft geben, wie die betreffende Person sitzt. Durch den Einbau einer Sitzmatte in einen Fahrzeugsitz werden durch die verschiedenen Gegebenheiten des Fahrzeugsitzes unterschiedliche mechanische Vorspannungen auf die einzelnen Sensorelemente ausgeübt.

Erfindungsgemäß wird nun nach dem Einbau herstellerseitig mit einem Diagnosetester überprüft, welche Sensorwerte die einzelnen Sensorelemente ohne eine Belastung auf die Sitzfläche aufweisen, um daraus Korrekturwerte abzuleiten, die für solche mechanischen Vorspannungen aufgrund des Einbaus eine Kompensation bieten und dann im Betrieb als Korrekturwerte verwendet werden.

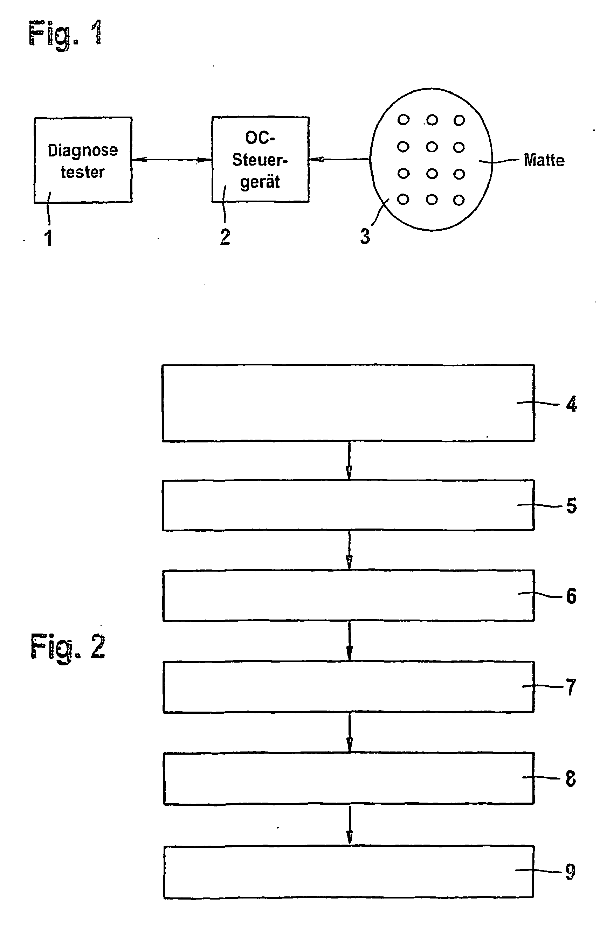

In Figur 1 ist als Blockschaltbild die Konfiguration dargestellt, bei der ein Diagnosetester an ein Steuergerät, das an eine Sitzmatte angeschlossen ist, verbunden wird. Ein Diagnosetester 1 ist über ein Datenein-/ausgang mit einem Steuergerät 2 für eine Sitzmatte verbunden. An einem Dateneingang des Steuergeräts 2 ist eine Sitzmatte 3 mit verschiedenen Sensorelementen, die hier als Kreise dargestellt sind, verbunden. Über weitere, hier nicht dargestellte, Datenein und -ausgänge ist das Steuergerät 2 beispielsweise über einen Bus mit anderen Fahrzeugkomponenten wie einem Rückhaltesystem verbunden, um die Sitzmattendaten, also die Sensorwerte zu diesen Fahrzeugkomponenten in roher und/oder ausgewerteter Form zu übertragen.

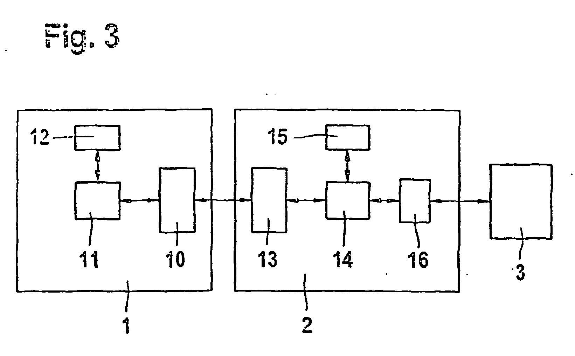

Figur 3 zeigt als Blockschaltbild den inneren Aufbau des Diagnosetesters 1 und des Steuergeräts 2. Der Diagnosetester 1 weist eine Datenübertragungsschnittstelle 10 auf, über die der Diagnosetester 1 mit dem Steuergerät 2 verbunden ist. Über einen Datenein-/ausgang ist die Datenübertragungsschnittstelle 10 mit einem Prozessor 11 des Diagnossetesters 1 verbunden. Über einen zweiten Datenein-/ausgang ist der Prozessor 11 mit einem Speicher 12 verbunden. In dem Speicher 12 sind die Sollwerte und das Password bevorratet. Der Prozessor 11 dient zum Vergleich der Sollwerte mit den Sensorwerten und zur Auswertung der Password-Abfrage.

Die Datenübertragungsschnittstelle 10 dient zur Durchführung der Datenübertragung zwischen dem Diagnosetester 1 und dem Steuergerät 2. Das Steuergerät 2 weist eine erste Datenübertragungsschnittstelle 13, eine weitere Datenübertragungsschnittstelle 16, einen Speicher 15 und einen Prozessor 14, der hier ein Mikrokontroller ist, auf. Die Datenübertragungsschnittstelle 13 ist über einen ersten Datenein-/ausgang mit der Datenübertragungsschnittstelle 10 des Diagnosetesters 1 verbunden. Über einen zweiten Datenein-/ausgang ist die Datenübertragungsschnittstelle 13 mit dem Prozessor 14 verbunden. Der Prozessor 14 ist über einen zweiten Datenein-/ausgang mit dem Speicher 15 verbunden. Bei einem dritten Datenein-/ausgang ist der Prozessor 14 an die Datenübertragungsschnittstelle 16 angeschlossen. Die Datenübertragungsschnittstelle 16 verbindet über ihren zweiten Datenein-/ausgang das Steuergerät 2 mit der Sensormatte 3. Der Speicher 15 dient zur Bevorratung des Passwords und der Korrekturwerte für die Sensorwerte. Der Prozessor 14 führt die Korrektur der Sensorwerte durch, bevor sie weiterverarbeitet werden. Die Datenschnittstellen 13 und 16 dienen zur Datenübertragung mit dem Diagnosetester 1 und der Sensormatte 3.

In Figur 2 ist als Flußdiagramm das erfindungsgemäße Verfahren dargestellt. In Verfahrensschritt 4 wird der Diagnosetester 1 mit dem Steuergerät 2 verbunden, und zwar durch die Verbindung über die Datenübertragungsschnittstellen 10 und 13. Nach der Initialisierung der Datenübertragungsverbindung zwischen dem Diagnosetester 1 und dem Steuergerät 2 fragt das Steuergerät 2 von dem Diagnosetester 1 ein Password ab, und beendet das Verfahren, sofern das Password des Diagnosetesters nicht stimmt.

Stimmt jedoch das Password, dann wird in Verfahrensschritt 6 das Auslesen der Sensorwerte der Sensormatte 3 durch den Diagnosetester 1 durchgeführt. In Verfahrensschritt 7 führt nun der Prozessor 11 einen Vergleich der Sensorwerte mit Sollwerten durch, die der Prozessor 11 aus dem Speicher 12 lädt. Die Differenz zwischen den Sollwerten und den Sensorwerten überträgt dann der Diagnosetester 1 an das Steuergerät 2 als die Korrekturwerte. Der Prozessor 14 speichert diese Korrekturwerte im Speicher 15 in Verfahrensschritt 9. Während dem Betrieb der Sensormatte 3 korrigiert dann der Prozessor 14 die ausgelesenen Sensorwerte aus der Sensormatte 3 und die Korrekturwerte in dem Speicher 15. Damit werden die Korrekturwerte zur Kalibrierung der Sensorwerte verwendet. Das Verfahren wird bei einer unbelasteten Sitzfläche eingesetzt, so dass nur mechanische Spannungen, die durch den Einbau der Sensormatte 3 bedingt sind, Einfluß auf die Sensorzellen nehmen.

## Patentansprüche

1. Verfahren zur Anpassung von Sensorzellen einer Sitzmatte (3) an eine mechanische Vorspannung, die durch einen Einbau der Sitzmatte (3) in einen Fahrzeugsitz verursacht wird, **dadurch gekennzeichnet, daß** ein Diagnosetester (1) an ein Steuergerät (2) für die Sitzmatte (3) angeschlossen wird, daß über das Steuergerät (2) Sensorwerte der Sensorzellen von dem Diagnosetester (1) ausgelesen werden, daß die Sensorwerte von dem Diagnosetester (1) mit Sollwerten verglichen werden und daß dem Steuergerät (2) zur Anpassung der Sensorzellen Korrekturwerte für die Sensorwerte in Abhängigkeit von dem Vergleich übertragen werden.

2. Verfahren nach Anspruch 1, **dadurch gekennzeichnet, daß** die Korrekturwerte in einem ersten Speicher (15) des Steuergeräts (2) abgespeichert werden.

3. Verfahren nach Anspruch 1 oder 2, **dadurch gekennzeichnet, daß** vor dem Übertragen der Sensorwerte vom Steuergerät (2) zu dem Diagnosetester (1) eine Password-Abfrage durch das Steuergerät (2) an den Diagnosetester (1) durchgeführt wird.

## Claims

1. Method for adapting sensor cells of a seat mat (3) to a mechanical prestress which is caused by installation of the seat mat (3) in a vehicle seat, **characterized in that** a diagnostic tester (1) is connected to a control device (2) for the seat mat (3), **in that** sensor values of the sensor cells are read out by the diagnostic tester (1) by means of the control device (2), **in that** the sensor values are compared with setpoint values by the diagnostic tester (1), and **in that** correction values for the sensor values are transmitted to the control device (2) as a function of the comparison in order to adapt the sensor cells.

2. Method according to Claim 1, **characterized in that** the correction values are stored in a first memory (15) of the control device (2).

3. Method according to Claim 1 or 2, **characterized in that** a password interrogation to the diagnostic tester (1) is carried out by means of the control device (2) before the sensor values are transmitted from the control device (2) to the diagnostic tester (1).

## Revendications

1. Procédé pour adapter des cellules de capteurs d'une natte de siège (3) à une précontrainte mécanique qui est provoquée par une mise en place de la natte de siège (3) dans un siège de véhicule,
**caractérisé en ce qu'**
un contrôleur de diagnostic est connecté à un appareil de commande (2) prévu pour la natte de siège (1), des valeurs de capteurs des cellules de capteurs sont lues par le contrôleur de diagnostic (1) par l'intermédiaire de l'appareil de commande (2), les valeurs de capteurs sont comparées à des valeurs de consigne par le contrôleur de diagnostic (1) et des valeurs de correction pour les valeurs de capteurs sont transmises à l'appareil de commande (2) pour l'adaptation des cellules de capteurs en fonction de la comparaison.

2. Procédé selon la revendication 1,
**caractérisé en ce que**
les valeurs de correction sont mémorisées dans une première mémoire (15) de l'appareil de commande (2).

3. Procédé selon la revendication 1 ou 2,
**caractérisé en ce qu'**
avant la transmission des valeurs de capteurs de l'appareil de commande (2) au contrôleur de diagnostic (1), l'appareil de commande (2) demande un mot de passe au contrôleur de diagnostic (1).
